# EUROPÄISCHE PATENTSCHRIFT

(11) **EP 1 576 265 B1**
(45) Veröffentlichungstag und Bekanntmachung des Hinweises auf die Patenterteilung: **12.04.2006**
(21) Anmeldenummer: 03775381.1
(22) Anmeldetag: 21.11.2003
(51) Int. Cl.: F02B 37/18, F02M 13/00

(54) **ABGASTURBOLADER FÜR EINE BRENNKRAFTMASCHINE**
EXHAUST GAS TURBOCHARGER FOR AN INTERNAL COMBUSTION ENGINE
TURBOCOMPRESSEUR A GAZ D'ECHAPPEMENT POUR MOTEUR A COMBUSTION

(30) Priorität: 23.12.2002 DE 10260778
(43) Veröffentlichungstag der Anmeldung: 21.09.2005
(73) Patentinhaber: DaimlerChrysler AG, 70567 Stuttgart (DE)
(72) Erfinder: SCHMID, Wolfram, 72622 Nürtingen (DE); SUMSER, Siegfried, 70327 Stuttgart (DE)
(86) Internationale Anmeldenummer: PCT/EP2003/013071
(87) Internationale Veröffentlichungsnummer: WO 2004/059146

(56) Entgegenhaltungen:
- EP-A- 0 860 589
- GB-A- 1 531 080
- US-A- 4 406 126
- US-A- 4 611 465
- US-A- 5 943 864

## Beschreibung

Die Erfindung bezieht sich auf einen Abgasturbolader für eine Brennkraftmaschine nach dem Oberbegriff des Anspruches 1.

In der Druckschrift DE 43 12 078 A1 wird eine aufgeladene Brennkraftmaschine mit einer Abgasturbine im Abgasstrang und einem Verdichter im Ansaugtrakt der Brennkraftmaschine beschrieben. Über den Verdichter wird angesaugte Verbrennungsluft auf einen erhöhten Ladedruck verdichtet, unter dem die Luft den Zylinder der Brennkraftmaschine zugeführt wird. Dem Verdichter ist ein Zusatzverdichter zugeordnet, welcher auf der gleichen Welle wie der Hauptverdichter aufsitzt und wie dieser von der Abgasturbine angetrieben wird. Über den Zusatzverdichter wird rückgeführtes Abgas aus dem Abgasstrang zunächst auf einen erhöhten Druck vorverdichtet und anschließend dem vom Hauptverdichter angesaugten Luftmassenstrom beigemischt und in den Ansaugtrakt geführt.

Aufgrund der Vorverdichtung des Abgases im Zusatzverdichter kann das Spektrum der Betriebsbedingungen erweitert werden unter denen eine Abgasrückführung durchgeführt werden kann. Der Zusatzverdichter setzt jedoch einen verhältnismäßig großen konstruktiven Aufwand voraus.

Die US 4 611 465 offenbart einen Abgasturbolader für eine Brennkraftmaschine, der einen Verdichter im Ansaugtrakt und eine Abgasturbine im Abgasstrang umfasst. Die Abgase der Brennkraftmaschine werden einem spiralförmigen Abgassammelraum, welcher im Turbinengehäuse ausgebildet ist, zugeführt, aus dem die Abgase dem Turbinenrad zugeführt werden. Die Abgase strömen über einen Turbineneintrittsquerschnitt auf das Turbinenrad und treiben dieses an.

Die in der US 4 611 465 beschriebene Brennkraftmaschine besitzt zwei Zylinderbänke, deren Abgase jeweils-einem Turbineneinlasskanal der Abgasturbine zugeführt werden. Von jedem Turbineneinlasskanal zweigt ein Abgas-Bypass ab, wobei die beiden Bypass-Leitungen in einen gemeinsamen Leitungsabschnitt münden, in welchem ein einstellbares, ladedruckgeregeltes Bypassventil angeordnet ist. Die Bypass-Leitung mündet in die Abgasleitung stromab der Abgasturbine. Das BypassVentil wird in Öffnungsstellung versetzt, sobald der Ladedruck im Ansaugtrakt stromab des Verdichters einen gegebenen Grenzwert überschreitet, woraufhin Abgas unter Umgehung des Turbinenrades direkt in die Abgasleitung eingeleitet wird.

Die Abgas-Bypass-Leitung verläuft außerhalb des Turbinengehäuses und mündet auch außerhalb des Turbinengehäuses in den Abgasleitungsstrang stromab der Abgasturbine. Diesem Bypass kommt die ausschließliche Funktion zu, einen Überdruck abzubauen bzw. zu verhindern. Weitergehende Funktionen sind nicht zu realisieren.

Der Erfindung liegt das Problem zugrunde, mit einfachen konstruktiven Maßnahmen einen Abgasturbolader in der Weise auszugestalten, dass über die originäre Funktion der Verdichtung von Verbrennungsluft hinaus ein weiterer Einsatz als Gasförderpumpe möglich ist.

Dieses Problem wird erfindungsgemäß mit den Merkmalen des Anspruches 1 gelöst. Die Unteransprüche geben zweckmäßige Weiterbildungen an.

Bei dem erfindungsgemäßen Abgasturbolader bildet die Abgasturbine eine Pumpe für die Gasfördereinrichtung. Hierfür ist ein den Turbineneintrittsquerschnitt überbrückender, einen Abgassammelraum in der Turbine stromauf des Turbinenrades mit einem Austrittsbereich der Abgasturbine verbindender Abgas-Bypass vorgesehen, in den eine Gasförderleitung der Gasfördereinrichtung einmündet. Aufgrund des statischen Druckabfalls zwischen dem Abgassammelraum und dem Austrittsbereich wird eine Förderwirkung erzielt, über die das in der Gasförderleitung befindliche Gas angesaugt und in den Austrittsbereich der Abgasturbine gefördert wird. Die Abgasturbine übernimmt hierbei die Funktion einer Pumpe für die Gasfördereinrichtung. Diese Pumpenfunktion kann allein über die Einmündung der Gasförderleitung in den Bypass zum Turbineneintrittsquerschnitt realisiert werden, über den der Hauptmassenstrom des Abgases aus dem Abgasstrang dem Turbinenrad zugeführt wird. Der über den Abgas-Bypass geführte Teilmassenstrom des Abgases beträgt hierbei zweckmäßig nicht mehr als 5 % des gesamten, durch die Abgasturbine geführten Abgasmassenstromes und liegt beispielsweise im Bereich zwischen etwa 1 % und 2 %.

Die Pumpenfunktion kann verbessert werden, indem in den Abgas-Bypass eine Düse mit verjüngtem Querschnitt integriert wird und die Gasförderleitung stromab des engsten Düsenquerschnittes in den Bypass einmündet. Durch die Entspannung des den engsten Düsenquerschnitt passierenden Abgasmassenstromes wird eine weitere Druckabsenkung erzielt, die für eine zusätzliche Förderwirkung für die Gasfördereinrichtung genutzt werden kann.

Als Düse im Abgas-Bypass kann ein vom Abgas umströmtes Ejektorteil in den Bypass integriert werden, wobei über das Ejektorteil der Gasmassenstrom aus der Gasfördereinrichtung in den Bypass einzuleiten ist. Das Ejektorteil weist hierfür eine Mündungsöffnung für den zu fördernden Gasmassenstrom in den Abgas-Bypass hinein auf.

Der Bypass erstreckt sich vorteilhaft ringförmig um das Turbinenrad, wobei über den Umfang des Bypass verteilt zweckmäßig eine Mehrzahl von Ejektorteilen angeordnet sind und jeweils zwischen zwei benachbarten Ejektorteilen ein engster Düsenquerschnitt gebildet ist. Die Ejektorteile können gleichartig ausgebildet sein, insbesondere identisch oder aber spiegelsymmetrisch ausgeführt sein, oder gemäß einer weiteren vorteilhaften Ausführung auch unterschiedlich konturiert sein, derart, dass der zwischen zwei benachbarten Ejektorteilen liegende Düseneintrittsquerschnitt und der Düsenaustrittsquerschnitt voneinander abweichende Strömungsrichtungen für das passierende Gas bewirken. Auf diese Weise können zusätzliche strömungstechnische Effekte erzeugt werden.

Im Ejektorteil befindet sich zweckmäßig ein Mündungskanal für die Gasförderleitung, wobei der Mündungskanal etwa senkrecht zur Anströmrichtung des Abgases in dem Bypass verläuft. Diese Ausführung ermöglicht in einfacher Weise einen Anschluss der Gasförderleitung an das Ejektorteil. Der Mündungskanal ist über die Mündungsöffnung mit dem Bypass verbunden, wobei die Mündungsöffnung beispielsweise schlitzförmig ausgebildet sein kann und die Ausrichtung der Mündungsöffnung näherungsweise parallel zur Ausrichtung des Düsenaustrittsquerschnittes liegt, so dass das in den Bypass eintretende Gas etwa die gleiche Strömungsrichtung aufweist wie das durch den Bypass strömende Abgas. Hierdurch wird der strömungstechnische Mitnahmeeffekt verbessert.

Die Gasfördereinrichtung kann als Pumpe beispielsweise für eine Kurbelgehäuse-Entlüftungseinrichtung eingesetzt werden, über die ölhaltige Entlüftungsgase aus dem Kurbelgehäuse abgeleitet und einer Reinigung unterzogen werden. Die Abgasturbine übernimmt hierbei die Funktion einer Pumpe für die Entlüftungsgase und fördert diese - nach dem Durchlaufen eines Ölabscheiders - in den Abgasstrang hinein.

Gemäß einer weiteren vorteilhaften Verwendung ist vorgesehen, dass die Gasfördereinrichtung eine Pumpe für eine Lufteinblaseeinrichtung bildet, über die nach dem Abgasturbinenrad zusätzliche Umgebungsluft zuführbar ist. Die eingeblasene Umgebungsluft kann in einem der Turbine nachgeordneten Katalysator zur Unterstützung der Katalysatorfunktion und/oder einem Rußfilter zur Unterstützung des Abbrennprozesses des Rußes ausgenutzt werden, wodurch insbesondere das Abgasverhalten nach einem Kaltstart des Motors verbessert werden kann.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Brennkraftmaschine mit Abgasturbolader, dessen Abgasturbine eine Pumpe für eine Kurbelgehäuse-Entlüftungsein- richtung sowie für eine Lufteinblaseeinrichtung bildet,
- Fig. 2: einen Schnitt durch die Abgasturbine mit einem in das Turbinengehäuse eingebrachten Anschlussstutzen, über den zu förderndes Gas in den Austrittsbereich des Turbinenrades einzuleiten ist,
- Fig. 3: ein in eine Ebene projizierter Ausschnitt aus einem ringförmigen, das Turbinenrad umgreifenden Bypass im Turbinengehäuse mit einer Mehrzahl parallel angeordneter, düsenförmiger Ejektorteile, über die zu förderndes Gas in den Bypass einzuleiten ist,
- Fig. 3a: ein Ejektorteil in einer vergrößerten Darstellung,
- Fig. 4: ein Ausschnitt aus dem Bypass mit zwei Ejektorteilen in einer alternativen Ausführung,
- Fig. 5: ein Ausschnitt aus dem Bypass mit zwei Ejektorteilen in einer weiteren Ausführung.

In den Figuren sind gleiche Bauteile mit gleichen Bezugszeichen versehen.

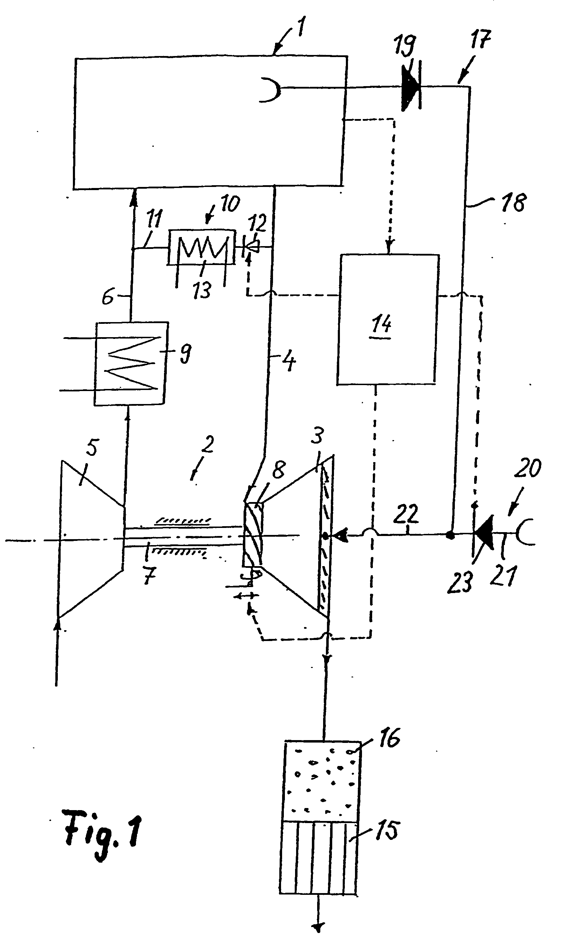

Der in Fig. 1 dargestellten Brennkraftmaschine 1 - ein Ottomotor oder ein Dieselmotor - ist ein Abgasturbolader 2 mit einer Abgasturbine 3 im Abgasstrang 4 und einem Verdichter 5 im Ansaugtrakt 6 zugeordnet. Die Abgasturbine 3 wird von den unter Druck stehenden Abgasen der Brennkraftmaschine 1 angetrieben. Über eine Welle 7 wird der Verdichter 5 von der Abgasturbine 3 angetrieben, welcher Umgebungsluft ansaugt und auf einen erhöhten Ladedruck verdichtet. Die Abgasturbine 3 ist mit einer variablen Turbinengeometrie 8 zur veränderlichen Einstellung des wirksamen Turbineneintrittsquerschnittes ausgestattet.

Stromab des Verdichters 5 ist im Ansaugtrakt 6 ein Ladeluftkühler angeordnet, in den die zuvor im Verdichter 5 komprimierte Luft eintritt und gekühlt wird. Stromab des Ladeluftkühlers 9 wird die Ladeluft unter Ladedruck den Zylindereinlässen der Brennkraftmaschine 1 zugeführt.

Des Weiteren ist die Brennkraftmaschine 1 mit einer Abgasrückführungseinrichtung 10 ausgestattet, welche eine Rückführleitung 11 zwischen dem Abgasstrang 4 stromauf der Abgasturbine 3 und dem Ansaugtrakt 6 stromab des Ladeluftkühlers 9 umfasst. In die Rückführleitung 11 ist ein einstellbares Rückführventil 12 sowie ein Kühler 13 integriert.

Im Abgasstrang 4 ist stromab der Abgasturbine 3 ein Katalysator 15 zur katalytischen Reinigung der abzublasenden Abgase angeordnet. Dem Katalysator 15 kann - im Falle eines Dieselmotors - ein Rußfilter 16 vorgeschaltet sein, über den Rußpartikel auszufiltern und gegebenenfalls abzubrennen sind.

Weiterhin ist die Brennkraftmaschine 1 mit einer Kurbelgehäuse-Entlüftungseinrichtung 17 ausgestattet, die eine Gasförderleitung 18 zwischen dem Kurbelgehäuse der Brennkraftmaschine und der Abgasturbine 3 umfasst. In der Gasförderleitung 18 befindet sich ein Rückschlagventil 19, welches in Richtung Abgasturbolader 3 öffnet und ein unerwünschtes Rückströmen zurück in das Kurbelgehäuse verhindert. Gegebenenfalls kann das Ventil 19 aber auch als aktiv einstellbares Ventil ausgeführt sein.

Der Brennkraftmaschine 1 ist darüber hinaus eine Lufteinblaseeinrichtung 20 zugeordnet, über die Frischluft aus der Umgebung angesaugt und über die Abgasturbine 3 dem Katalysator 15 sowie dem Rußfilter 16 zugeführt wird, um die Katalysatorfunktion insbesondere nach einem Kaltstart der Brennkraftmaschine sowie das Rußabbrennen im Rußfilter zu unterstützen. Die Lufteinblaseeinrichtung 20 umfasst eine Gasförderleitung 21, über die die Verbrennungsluft aus der Atmosphäre angesaugt wird und in der sich ein einstellbares Ventil 23 befindet. Die Gasförderleitung 21 der Lufteinblaseeinrichtung 20 mündet mit der Gasförderleitung 18 der Kurbelgehäuse-Entlüftungseinrichtung 17 in einen gemeinsamen Leitungsabschnitt 22, welcher in die Abgasturbine 3 geführt ist.

Über eine Regel- und Steuereinheit 14 sind sämtliche einstellbaren Aggregate der Brennkraftmaschine in Abhängigkeit von Zustands- und Betriebsgrößen einzustellen. Dies betrifft insbesondere das Rückführventil 12 in der Abgasrückführungseinrichtung 10, die variable Turbinengeometrie 8 in der Abgasturbine 3 und das Ventil 23 in der Lufteinblaseeinrichtung 20.

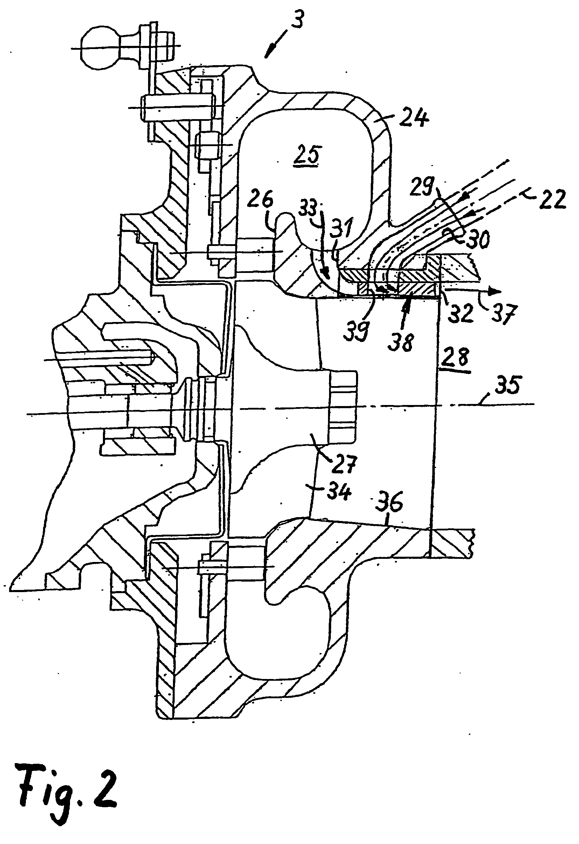

Der Schnittdarstellung der Abgasturbine 3 gemäß Fig. 2 ist zu entnehmen, dass im Turbinengehäuse 24 ein Spiralkanal 25 ausgebildet ist, der einen Sammelraum für das eingeleitete Abgas der Brennkraftmaschine bildet. Das Abgas wird aus dem Spiralkanal 25 über einen Strömungseintrittsquerschnitt 26, in dem sich die variable Turbinengeometrie 8 befindet, radial auf das Turbinenrad 27 geführt. Das auf das Turbinenrad 27 auftreffende Abgas treibt dieses an und verlässt anschließend im entspannten Zustand über den Austrittsbereich 28 die Abgasturbine 3 und wird im weiteren Verlauf im Abgasstrang einer Reinigung unterzogen.

Am Turbinengehäuse 24 ist ein Anschlussstutzen 29 ausgebildet, in dem sich ein Anschlusskanal 30 befindet, wobei mit dem Anschlussstutzen 29 der Leitungsabschnitt 22 der Kurbelgehäuse-Entlüftungseinrichtung und/oder der Lufteinblaseeinrichtung (Fig. 1) zu verbinden ist. Über den Anschlussstutzen 29 werden entweder Entlüftungsgase aus dem Kurbelgehäuse oder Umgebungsluft der Abgasturbine 3 zugeführt.

Der Turbineneintrittsquerschnitt 26, über den Abgas aus dem Abgassammelraum bzw. Spiralkanal 25 dem Turbinenrad 27 zuführbar ist, wird von einem Abgas-Bypass 31 überbrückt, welcher im Turbinengehäuse 24 ausgebildet ist und einen als Austrittsdiffusor 36 ausgeführten Abströmkanal, welcher den Austrittsbereich 28 der Abgasturbine bildet, umgreift. Der Bypass 31 zweigt vom Spiralkanal 25 ab und mündet axial in den Austrittsbereich 28. Über den Bypass wird ein Teilmassenstrom des im Spiralkanal 25 befindlichen Abgases gemäß Pfeilrichtung 33 in Radialrichtung in den Bypass 31 eingeleitet und nach Durchströmen des Bypass in Pfeilrichtung 37 axial wieder aus dem Bypass abgeleitet. Der Anschlusskanal 30 mündet radial in den axial verlaufenden Abschnitt des Bypass 31 ein. Aufgrund des Druckgefälles zwischen dem Spiralkanal 25 und dem Austrittsbereich 28 wird im Ejektor eine Pumpwirkung erzielt, über die über den Leitungsabschnitt 22 und den Anschlusskanal 30 zugeführtes Gas in den Bypass 31 und weiter in den Austrittsbereich 28 gefördert wird.

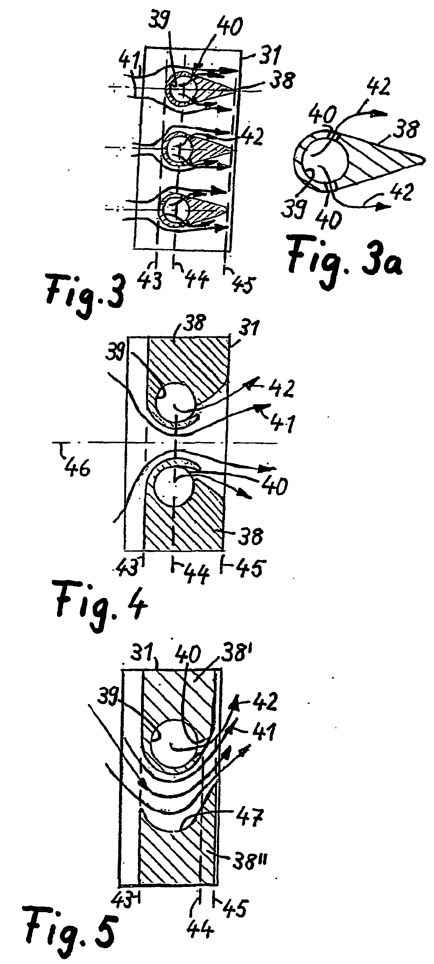

Der Bypass 31 ist zweckmäßig ringförmig ausgebildet. Im Bypass ist vorteilhaft zumindest ein Ejektorteil 38 angeordnet, welches die Funktion einer Düse im Bypass 31 übernimmt und über das Gas der Gasfördereinrichtung in den Bypass einzuleiten ist. Zweckmäßig sind eine Mehrzahl von über den Umfang verteilter Ejektorteile 38 im Bypass vorgesehen, über die jeweils Gas in den Bypass einzuführen ist, wobei gegebenenfalls auch nur über eines oder eine beschränkte Anzahl von Ejektorteilen das Gas eingeleitet werden kann. In dem Ejektorteil 38 ist ein Mündungskanal 39 ausgebildet, welcher mit dem Anschlusskanal 30 im Anschlussstutzen 29 kommuniziert und welcher etwa senkrecht zur Strömungsrichtung des Bypass 31 verläuft. In den Mündungskanal 39 im Ejektorteil 38 ist eine Mündungsöffnung eingebracht (in den Fig. 3 bis 5 mit Bezugszeichen 40 gekennzeichnet), über die das zugeführte Gas in den Bypass 31 abgeleitet wird.

Die eine Düse bildenden Ejektorteile im Bypass 31 stellen aufgrund ihres reduzierten Strömungsquerschnittes sicher, dass nur ein verhältnismäßig kleiner Anteil des Abgases über den Bypass 31 unter Umgehung des Turbinenrades in den Austrittsbereich der Abgasturbine geleitet wird. Zweckmäßig beträgt der durch den Bypass 31 geleitete Abgasmassenstrom nicht mehr als 5 % des gesamten, die Abgasturbine passierenden Abgasmassenstromes, wobei vorteilhaft Werte zwischen 1 % und 2 % realisiert werden.

In Fig. 3 ist ein Ausschnitt eines in die Ebene projizierten Segmentes eines Bypass 31 dargestellt. Im Bypass sind eine Mehrzahl über den Umfang gleichmäßig verteilter Ejektorteile 38 parallel zueinander angeordnet, welche strömungsgünstig konturiert sind und von dem Abgas in Pfeilrichtung 41 umströmt werden. Über die Mündungskanäle 39 wird dem Bypass 31 das zu fördernde Gas zugeführt, siehe auch Fig. 3a. Jeder Mündungskanal 39 ist über zwei schlitzförmige Mündungsöffnungen 40 mit dem Bypass verbunden; über die Mündungsöffnungen 40 kann in Pfeilrichtung 42 das zuzuführende Gas in den Bypass 31 einströmen.

Je zwei parallel angeordnete und benachbarte Ejektorteile 38 bilden eine Düse innerhalb des Bypass 31, dessen engster Düsenquerschnitt sich im Bereich eines kreisrunden Abschnittes der Ejektorteile 38 befindet, die sich in Strömungsrichtung des Abgases gesehen etwa dreieckförmig verjüngen. Der Düseneintrittsquerschnitt - die angeströmte Vorderseite der Ejektorteile - ist mit Bezugszeichen 43 versehen, der engste Düsenquerschnitt zwischen benachbarten Ejektorteilen mit Bezugszeichen 44 und der Düsenaustrittsquerschnitt - im Bereich des spitzen Endes auf der Abströmseite - mit Bezugszeichen 45. Die Mündungsöffnungen 40 befinden sich stromab des engsten Düsenquerschnittes 44.

Auch in den Ausführungsbeispielen gemäß den Fig. 4 und 5 befinden sich die Mündungsöffnungen 40 stromab des engsten Düsenquerschnittes zwischen benachbarten Ejektorteilen 38. Gemäß Fig. 4 sind jeweils zwei benachbarte Ejektorteile 38 bezüglich einer in Strömungsrichtung verlaufenden Ebene 46 spiegelsymmetrisch ausgebildet, wobei der den Mündungskanal 39 im Ejektorteil 38 begrenzende Wandabschnitt jeweils kreisförmig ausgeführt ist. Die Mündungsöffnungen 40 sind in der Weise platziert, dass das in Pfeilrichtung 42 ausströmende Gas etwa eine Strömungsrichtung besitzt, die parallel ist zur Strömungsrichtung des in Pfeilrichtung 41 den engsten Düsenquerschnitt passierenden Abgases.

Beim Ausführungsbeispiel gemäß Fig. 5 sind benachbarte Ejektorteile 38' und 38" unterschiedlich aufgebaut. Ein erstes Ejektorteil 38' entspricht etwa der Ausführung gemäß Fig. 4 mit einem Mündungskanal 39, der über eine Mündungsöffnung 40 stromab des engsten Düsenquerschnittes 44 in den Bypass 31 mündet. Ein zweites Ejektorteil 38" besitzt keinen Mündungskanal bzw. keine Mündungsöffnung für die Zufuhr von Gas, sondern weist eine teilkreisförmige Ausbuchtung 47 auf, die komplementär zum kreisförmigen Abschnitt des benachbarten Ejektorteiles 38' ausgebildet ist, in welchem sich der Mündungskanal 39 befindet. Hierdurch ergibt sich ein bogenförmiger Strömungskanal zwischen den benachbarten Ejektorteilen 38' und 38", dessen engster Düsenquerschnitt 44 in Richtung des Düsenaustrittsquerschnittes 45 verschoben ist. Über die bogenförmige Ausgestaltung des Düsenkanals ist eine Umlenkung der Abgasströmung durch den Bypass möglich, so dass die Einströmung des Abgases über den Düseneintrittsquerschnitt 43 eine andere Richtung aufweist als die Abströmung im Düsenaustrittsquerschnitt 45.

## Patentansprüche

1. Abgasturbolader für eine Brennkraftmaschine, mit einem Verdichter (5) im Ansaugtrakt (6) und einer Abgasturbine (3) im Abgasstrang (4), wobei die Abgasturbine (3) in einem Turbinengehäuse (24) einen Abgassammelraum aufweist, dessen Abgas dem Turbinenrad (27) über einen Turbineneintrittsquerschnitt zuführbar ist, mit einem den Turbineneintrittsquerschnitt überbrückenden Abgas-Bypass (31),
**dadurch** gekennheichnet,
dass der Abgas-Bypass (31) im Turbinengehäuse (24) ausgebildet ist und den Abgassammelraum mit einem Austrittsbereich (28) der Abgasturbine (3) verbindet, und dass die Abgasturbine (3) eine Pumpe für eine Gasfördereinrichtung bildet, wobei eine der Gasfördereinrichtung zugeordnete Gasförderleitung (18, 21) über einen im Turbinengehäuse (24) ausgebildeten Anschlussstutzen (29), in den ein Anschlusskanal (30) eingebracht ist, in den Abgas-Bypass (31) mündet.

2. Abgasturbolader nach Anspruch 1,
**dadurch gekennzeichnet,**
**dass** in den Abgas-Bypass (31) eine Düse mit verjüngtem Querschnitt integriert ist und dass die Gasförderleitung (18, 21) stromab des engsten Querschnitts der Düse in den Abgas-Bypass (31) mündet.

3. Abgasturbolader nach Anspruch 1 oder 2,
**dadurch gekennzeichnet,**
**dass** in den Abgas-Bypass (31) ein strömungsgünstig konturiertes und vom Abgas umströmtes Ejektorteil (38) integriert ist, welches eine Mündungsöffnung (40) in den Abgas-Bypass (31) für das zuzuführende Gas aufweist.

4. Abgasturbolader nach Anspruch 3,
**dadurch gekennzeichnet,**
**dass** im Ejektorteil (38) ein sich senkrecht zur Anströmrichtung des Abgases erstreckender Mündungsöffnung (40) für den Anschluss der Gasförderleitung (18, 21) ausgebildet ist und
**dass** die Mündungsöffnung (40) vom Mündungskanal (39) abzweigt.

5. Abgasturbolader nach Anspruch 3 oder 4,
**dadurch gekennzeichnet,**
**dass** das Ejektorteil (38) im Bypass (31) einen sich in Strömungsrichtung verjüngenden Querschnitt aufweist.

6. Abgasturbolader nach einem der Ansprüche 3 bis 5,
**dadurch gekennzeichnet,**
**dass** der Bypass (31) ringförmig um das Turbinenrad (27) angeordnet ist und über den Umfang_des Bypass (31) verteilt eine Mehrzahl von Ejektorteilen (38) angeordnet sind, wobei zwischen zwei benachbarten Ejektorteilen (38) jeweils ein engster Düsenquerschnitt (44) gebildet ist.

7. Abgasturbolader nach Anspruch 6,
**dadurch gekennzeichnet,**
**dass** über den Umfang verteilt gleichartige Ejektorteile (38) angeordnet sind.

8. Abgasturbolader nach Anspruch 6,
**dadurch gekennzeichnet,**
**dass** über den Umfang verteilt zumindest zwei unterschiedlich konturierte Ejektorteile (38) angeordnet sind, wobei jeweils zwei benachbarte Ejektorteile (38) einen Düsenquerschnitt für das Abgas begrenzen, dessen Einströmung und dessen Abströmung voneinander abweichende Richtungen besitzen.

9. Abgasturbolader nach Anspruch 8,
**dadurch gekennzeichnet,**
**dass** die beiden Ejektorteile (38) im Bereich des engsten Düsenquerschnitts (44) konvex bzw. konkav ausgebildet sind.

10. Abgasturbolader nach einem der Ansprüche 3 bis 9,
**dadurch gekennzeichnet,**
**dass** die Mündungsöffnung (40) schlitzförmig ausgebildet ist.

11. Abgasturbolader nach einem der Ansprüche 3 bis 10,
**dadurch gekennzeichnet,**
**dass** die Ausrichtung der Mündungsöffnung (40) näherungsweise parallel zur Ausrichtung des Düsenaustrittsquerschnitts (45) ist.

12. Verwendung eines Abgasturboladers nach einem der Ansprüche 1 bis 11 in einer Brennkraftmaschine, wobei die Gasfördereinrichtung eine Kurbelgehäuse-Entlüftungseinrichtung (17) ist und die Gasförderleitung (18) vom Kurbelgehäuse abzweigt.

13. Verwendung eines Abgasturboladers nach einem der Ansprüche 1 bis 12 in einer Brennkraftmaschine, wobei die Gasfördereinrichtung eine Lufteinblaseeinrichtung (20) ist und der Abgasturbine (3) Umgebungsluft über die Gasförderleitung (18) zuführbar ist.

## Claims

1. Exhaust gas turbocharger for an internal combustion engine with a compressor (5) in the suction parts (6) and an exhaust gas turbine (3) in the exhaust gas system (4) wherein the exhaust gas turbine (3) comprises an exhaust gas collecting chamber in a turbine housing (24), the exhaust gas of which collecting chamber is adapted to be fed to the turbine wheel (27) via a turbine inlet cross-section, with an exhaust gas bypass (31) bridging over the turbine inlet cross-section,
**characterised in that**
the exhaust gas bypass (31) is formed in the turbine housing (25) and connects the exhaust gas collecting chamber to an outlet area (28) of the exhaust gas turbine (3) and **in that** the exhaust gas turbine (3) forms a pump for a gas conveying device wherein a gas conduit (18, 21) assigned to the gas conveying device runs via a connecting nozzle formed (29) in the turbine housing (24) in which a connecting duct (30) is arranged into the exhaust gas bypass (31).

2. Exhaust gas turbocharger according to claim 1,
**characterised in that**
a nozzle with a tapered cross-section is integrated into the exhaust gas bypass (31) and **in that** the gas conduit (18, 21) runs into the exhaust gas bypass (31) downstream of the narrowest cross-section of the nozzle.

3. Exhaust gas turbocharger according to claim 1 or 2,
**characterised in that**
a flow-promoting contoured ejector part (38) around which exhaust gas flows is integrated into the exhaust gas bypass (31), said ejector part (38) comprising a connecting opening (40) into the exhaust gas bypass (31) for the gas to be supplied.

4. Exhaust gas turbocharger according to claim 3,
**characterised in that** a connecting opening (40) extending perpendicularly to the flow direction of the exhaust gas is formed in the ejector part (38) for the connection of the gas conduit (18, 21) and **in that** the connecting opening (40) branches off from connecting duct (39).

5. Exhaust gas turbocharger according to claim 3 or 4,
**characterised in that**
the ejector part (38) comprises a cross-section which tapers in the flow direction in the bypass (31).

6. Exhaust gas turbocharger according to one of the claims 3 to 5,
**characterised in that**
the bypass (31) is arranged in the form of a ring around the turbine wheel (27) and a plurality of ejector parts (38) are distributed around the periphery of the bypass (31) wherein the narrowest nozzle cross-section (44) is formed respectively between two adjacent ejector parts (38).

7. Exhaust gas turbocharger according to claim 6,
**characterised in that**
ejector parts (38) of the same type are distributed around the periphery.

8. Exhaust gas turbocharger according to claim 6,
**characterised in that**
at least two differently contoured ejector parts (38) are distributed around the periphery wherein two adjacent ejector parts (38) respectively define a nozzle cross-section for the exhaust gas, of which the directions of inflow and outflow differ from each other.

9. Exhaust gas turbocharger according to claim 8,
**characterised in that**
the two ejector parts (38) are formed convexly or concavely in the region of the narrowest nozzle cross-section (44).

10. Exhaust gas turbocharger according to one of the claims 3 to 9,
**characterised in that**
the connecting opening (40) is formed as a slot.

11. Exhaust gas turbocharger according to one of the claims 3 to 10,
**characterised in that**
the arrangement of the connecting opening (40) is virtually parallel to the arrangement of the nozzle outlet cross-section (45).

12. Use of an exhaust gas turbocharger according to one of the claims 1 to 11 in an internal combustion engine wherein the gas conveying device is a crankcase ventilation device (17) and the gas conduit (18) branches off from the crankcase.

13. Use of an exhaust gas turbocharger according to one of the claims 1 to 12 in an internal combustion engine wherein the gas conveying device is an air blowing device (20) and ambient air can be fed to the exhaust gas turbine (3) via the gas conduit (18).

## Revendications

1. Turbocompresseur à gaz d'échappement pour un moteur à combustion interne, avec un compresseur (5) dans le tronçon d'aspiration (6) et une turbine à gaz d'échappement (3) dans le tronçon de gaz d'échappement (4), la turbine à gaz d'échappement (3) comportant dans une enveloppe de turbine (24) un espace collecteur des gaz d'échappement, dont les gaz d'échappement peuvent être amenés à la roue de la turbine (27) par l'intermédiaire d'une section transversale d'entrée de la turbine, avec une dérivation pour gaz d'échappement (31) chevauchant la section transversale d'entrée de la turbine,
**caractérisé en ce que** la dérivation pour gaz d'échappement (31) est conçue dans l'enveloppe de turbine (24) et relie l'espace collecteur des gaz d'échappement avec une zone de sortie (28) de la turbine à gaz d'échappement (3), et **en ce que** la turbine à gaz d'échappement (3) forme une pompe pour un système de transport de gaz, une conduite de transport de gaz (18, 21) associée au système de transport de gaz débouchant dans la dérivation pour gaz d'échappement (31), par l'intermédiaire d'une tubulure de raccordement (29) conçue dans l'enveloppe de turbine (24) dans laquelle est montée une canalisation de raccordement (30).

2. Turbocompresseur à gaz d'échappement selon la revendication 1,
**caractérisé en ce qu'**une buse à section transversale rétrécie est intégrée dans la dérivation pour gaz d'échappement (31) et **en ce que** la conduite de transport de gaz (18, 21) débouche dans la dérivation pour gaz d'échappement (31), en aval de la section transversale la plus étroite de la buse.

3. Turbocompresseur à gaz d'échappement selon la revendication 1 ou 2,
**caractérisé en ce qu'**un élément éjecteur (38) présentant un contour facilitant l'écoulement, entouré par des gaz d'échappement, comportant une bouche (40) donnant sur la dérivation pour gaz d'échappement (31) pour le gaz à alimenter est intégré dans la dérivation pour gaz d'échappement (31).

4. Turbocompresseur à gaz d'échappement selon la revendication 3,
**caractérisé en ce qu'**une bouche (40) pour le raccordement de la conduite de transport de gaz (18, 21) s'étendant à la perpendiculaire de la direction de soufflage des gaz d'échappement est conçue dans l'élément éjecteur (38) et **en ce que** la bouche (40) bifurque de la canalisation d'embouchure (39).

5. Turbocompresseur à gaz d'échappement selon la revendication 3 ou 4,
**caractérisé en ce que** dans la dérivation (31), l'élément éjecteur (38) présente une section transversale qui se rétrécit dans le sens d'écoulement.

6. Turbocompresseur à gaz d'échappement selon l'une quelconque des revendications 3 à 5,
**caractérisé en ce que** la dérivation (31) est répartie sous forme annulaire sur la roue de la turbine (27) et **en ce qu'**une pluralité d'éléments éjecteurs (38) est répartie sur la périphérie de la dérivation (31), une section transversale de buse la plus étroite (44) étant formée entre deux éléments éjecteurs voisins (38).

7. Turbocompresseur à gaz d'échappement selon la revendication 6,
**caractérisé en ce que** des éléments éjecteurs (38) de type identique sont répartis sur la périphérie.

8. Turbocompresseur à gaz d'échappement selon la revendication 6,
**caractérisé en ce qu'**au moins deux éléments éjecteurs (38) avec un contour différent sont répartis sur la périphérie, respectivement deux éléments éjecteurs voisins (38) délimitant une section transversale de buse pour les gaz d'échappement, dont l'entrée et la sortie d'écoulement vont dans des directions différentes.

9. Turbocompresseur à gaz d'échappement selon la revendication 8,
**caractérisé en ce que** les deux éléments éjecteurs (38) sont conçus sous forme convexe ou concave dans la zone de la section transversale la plus étroite de la buse (44).

10. Turbocompresseur à gaz d'échappement selon l'une quelconque des revendications 3 à 9,
**caractérisé en ce que** la bouche (40) est conçue sous la forme d'une encoche.

11. Turbocompresseur à gaz d'échappement selon l'une quelconque des revendications 3 à 10,
**caractérisé en ce que** l'orientation de la bouche (40) est approximativement parallèle à l'orientation de la section transversale de sortie de la buse (45).

12. Turbocompresseur à gaz d'échappement selon l'une quelconque des revendications 1 à 11 dans un moteur à combustion interne, le système de transport de gaz étant un reniflard d'aération du carter (17) et la conduite de transport de gaz (18) bifurquant du carter du vilebrequin.

13. Utilisation d'un turbocompresseur à gaz d'échappement second l'une quelconque des revendications 1 à 12 dans un moteur à combustion interne, le système de transport de gaz étant un système d'injection d'air (20) et de l'air environnant pouvant être amené à la turbine de gaz échappement (3), par l'intermédiaire de la conduite de transport de gaz (18).
